# EUROPEAN PATENT APPLICATION

(11) **EP 4 050 771 A1**
(43) Date of publication of application: **31.08.2022**
(21) Application number: 22158500.3
(22) Date of filing: 24.02.2022
(51) Int. Cl.: H02K 1/2786, H02K 9/06

(54) **OUTER ROTOR ASSEMBLY AND BRUSHLESS MOTOR**

(30) Priority: 25.02.2021 CN 202120418799 U
(71) Applicant: Globe (Jiangsu) Co., Ltd., Changzhou, Jiangsu 213023 (CN)
(72) Inventor: SHENG, Luchun, Jiangsu, 213023 (CN); ZHANG, Lin, Jiangsu, 213023 (CN); HUANG, Wei, Jiangsu, 213023 (CN); TIAN, Jicheng, Jiangsu, 213023 (CN)
(74) Representative: Bergenstråhle & Partners AB

(57) **Abstract**

The disclosure provides an outer rotor assembly and a brushless motor. The outer rotor includes a housing, a rotating shaft, a fan, and a magnetic tile assembly. The housing includes a side wall and an end wall, the side wall and the end wall are of an integrated structure, and a shaft hole is formed in a center of the end wall. One end of the rotating shaft extends into the housing and penetrates out of the shaft hole, and the rotating shaft is fixedly connected with the shaft hole. The fan is fixedly connected with one end of the rotating shaft penetrating out of the shaft hole. And the magnetic tile assembly is disposed within the housing and fixedly connected to the side wall.

## Description

### TECHNICAL FIELD

The disclosure relates to the technical field of motors, and particularly relates to an outer rotor assembly and a brushless motor.

### BACKGROUND

The end cover of the outer rotor motor for the existing garden tool in the market is generally a diecasting alloy end cover. The end cover is of a split structure with the housing of the motor, and the concentricity of the end cover and the motor housing is poor. When the end cover is applied to a motor of a high rotating speed, the assembly requirement is high, and the dynamic balance performance is poor. The housing of the outer rotor motor is typically an annular steel sleeve. The housing is fixed to the rotating shaft by the end cover. The magnetic tile is mounted on and uniformly bonded to the inner wall of the housing by glue.

This process is sufficient to meet the usage requirements for low rotating speed motors and motors with not very harsh working condition. However, it cannot meet the usage requirements for motors with high-power, high rotating speed, and emergency stop functions. For example, the inner wall of the housing is relatively smooth, although the magnetic tile is bonded to the inner wall by glue, a large impulse can be produced to invalid the glue when the housing with high rotating speed stops in a sudden.

Otherwise, the unbalance requirement of the high-speed outer rotor motor to the rotor assembly is high. If the housing of the rotor assembly is fixed to the rotating shaft by the fan bracket, the unbalance of the rotor assembly is mainly depended by the concentricity of the shell and the bracket and concentricity of the bracket and the rotating shaft. The initial unbalance of the rotor assembly is generally large to enable a great vibration of the motor to affect the performance of the whole machine. In addition, the fan and the housing are made of metal materials and of great rotational inertial, when the motor suddenly stops, the motor shaft is suddenly stopped, then the fan is easy to rotate with respect to the motor shaft, the motor will be damaged. Therefore, it would be necessary to provide an outer rotor motor to solve the problems mentioned above.

### BRIEF DESCRIPTION OF THE DISCLOSURE

The disclosure provides an outer rotor assembly and a brushless motor. The outer rotor includes a housing, a rotating shaft, a fan, and a magnetic tile assembly. The housing includes a side wall and an end wall, wherein the side wall and the end wall are of an integrated structure, and a shaft hole is formed in a center of the end wall. One end of the rotating shaft extends into the housing and penetrates out of the shaft hole, and the rotating shaft is fixedly connected with the shaft hole. The fan is fixedly connected with one end of the rotating shaft penetrating out of the shaft hole. And the magnetic tile assembly is disposed within the housing and fixedly connected to the side wall.

In one embodiment of the disclosure, the magnetic tile assembly includes a magnetic tile clamp, a plurality of S-pole magnetic tiles, and a plurality of N-pole magnetic tiles. Wherein the magnetic tile clamp is disposed within the housing and fixedly connected with an inner wall of the side wall. The plurality of the N-pole magnetic tiles and the plurality of the S-pole magnetic tiles are arranged at intervals along the circumferential direction of the magnetic tile clamp, and are fixedly connected with the magnetic tile clamp.

In one embodiment of the disclosure, the magnetic tile clamp is a squirrel-cage magnetic tile clamp.

In one embodiment of the disclosure, the end wall is further provided with a plurality of heat dissipation holes, and the plurality of heat dissipation holes surround the shaft hole and are uniformly arranged on the end wall in a circumferential direction.

In one embodiment of the disclosure, the rotating shaft is in interference fit with the shaft hole, and a circumferential direction of a connecting position of the rotating shaft and the shaft hole is fixed in a welding manner.

In one embodiment of the disclosure, the fan includes a bottom plate and blades. Wherein a connecting hole is formed in a center of the bottom plate. The rotating shaft is in interference fit with the connecting hole to be fixedly connected. And the blades are arranged on one side, close to the end wall, of the bottom plate and are uniformly arranged in the circumferential direction.

In one embodiment of the disclosure, the bottom plate is further provided with balancing grooves. Wherein the balancing grooves are disposed on one side of the bottom plate away from the blade and are uniformly arranged around the connecting hole.

In one embodiment of the disclosure, rotating axes of the housing, the rotating shaft, the fan, and the magnetic tile assembly are located on a same straight line.

In one embodiment of the disclosure, the fan is a centrifugal fan, an axial-flow fan, or a hybrid fan.

The disclosure further provides a brushless motor of an outer rotor that includes an outer rotor and a stator assembly. The outer rotor includes a housing, a rotating shaft, a fan, and a magnetic tile assembly. The housing includes a side wall and an end wall, wherein the side wall and the end wall are of an integrated structure, and a shaft hole is formed in a center of the end wall. One end of the rotating shaft extends into the housing and penetrates out of the shaft hole, and the rotating shaft is fixedly connected with the shaft hole. The fan is fixedly connected with one end of the rotating shaft penetrating out of the shaft hole. The magnetic tile assembly is disposed within the housing and fixedly connected to the side wall. And the stator assembly is disposed within the housing, sleeved on the rotating shaft. The stator assembly includes a stator core, a plurality of tooth parts, and an armature winding. Wherein the stator core is arranged in the housing. The rotating shaft penetrates out of the stator core. The plurality of tooth parts are arranged at intervals on an outer edge of the stator core in a circumferential direction. And the armature winding is wound on the stator core.

In the disclosure, under high-speed operation of the brushless motor with the outer rotor, the motor rotor assembly is required to have a low unbalance amount. The initial unbalance of the rotor assembly is reduced by the integrated housing structure to facilitate the machining of the dynamic balance process and to improve the stability of high-speed operation of the motor.

In the disclosure, the magnetic tile clamp uniformly spaces the magnetic tiles apart from each other and is in totally contact with the axial planes of the magnetic tiles. Compared with the magnetic tile clamp of partial contact type, by the magnetic tile clamp of the disclosure, the situation that suction forces between the magnetic tiles cause uneven circumferential distribution and the uneven magnetic field distribution to reduce the performance of the motor can be solved well.

According to the disclosure, the rotating shaft and the integrated housing are welded to ensure the reliability of the structure of the rotor under a sudden brake in high-speed operation.

In the disclosure, the cost of the fan is low, the groove is arranged in the fan to facilitate the dynamic balance process of the rotor assembly. And the magnetic tile clamp and the fan are in a split way to fit for certain working conditions that the motor do not need to dissipate heat by itself. Then the motor can adapt to more working conditions.

The disclosure provides an outer rotor assembly and a brushless motor which can solve the shifting of the magnetic tiles and the potential invalidation risk caused by the falling off of the magnetic tiles. The rare earth usage amount can be reduced, and the economic benefit can be improved. The potential risk of loose failure of the rotor assembly structure caused by emergency braking under high-speed operation of the outer rotor brushless motor can be solved. In addition, the initial unbalance of the rotor assembly can be reduced. And the production process can be optimized to improve the production efficiency and reduce the disqualification rate.

### BRIEF DESCRIPTION OF THE DRAWINGS

To illustrate the technical solutions of the embodiments of the disclosure clearer, the drawings needed in the embodiments will be describe in simple bellow. The drawings bellow are merely related to certain embodiments of the disclosure, those skilled in the field can obtain some other drawings according to the drawings bellow without creative efforts.
FIG. 1 is a schematic structural diagram of an outer rotor assembly of the disclosure.
FIG. 2 is a schematic diagram of an explosion structure of the outer rotor assembly of the disclosure.
FIG. 3 is a schematic structural diagram of a housing of the outer rotor assembly of the disclosure.
FIG. 4 is a schematic structural diagram of a fan of the outer rotor assembly of the disclosure.
FIG. 5 is a schematic structural diagram of a magnetic tile clamp of the outer rotor assembly of the disclosure.

### Label description:

Outer rotor 100, housing 10, side wall 11, end wall 12, shaft hole 13, heat dissipation hole 14, rotating shaft 20, welding position 201, fan 30, bottom plate 31, connecting hole 311, blade 32, balancing groove 33, magnetic tile assembly 40, magnetic tile clamp 41, N pole magnetic tile 42, S pole magnetic tile 43, magnetic tile clamping hole 411.

### DETAILED DESCRIPTION

Specific embodiments of the disclosure will be described below, those skilled in the field can easily understand the advantages and effects of the disclosure according to the description of the embodiments. The disclosure may also be embodied or applied in other different specific embodiments. The details of the description can also be based on different viewpoints and applications. And various modifications or changes may be made without departing from the spirit of the disclosure.

It should be noted that the illustrations provided in the embodiments of the disclosure are merely in a schematic way to illustrate the basic idea of the disclosure. Therefore, the drawings only show assemblies related to the disclosure, rather than showing the number, shape, and size of the assemblies in actual implementation. And the types, quantities and proportions of the assemblies in actual implementation may be changed in any way. The layouts and patterns of the assemblies may also be more complex.

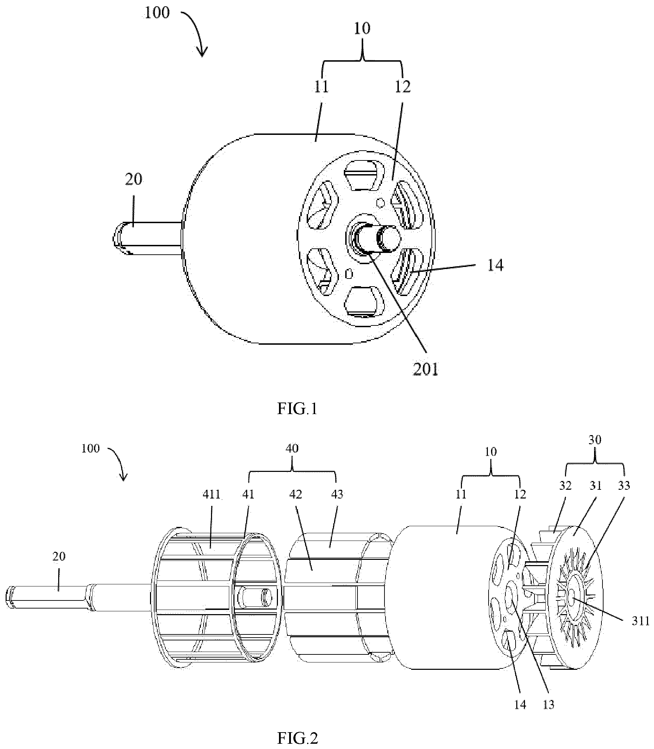

The disclosure provides a brushless motor with an outer rotor. The outer rotor motor may be used for a garden tool, such as hedge trimmer, string trimmer, mower, chain saw, top handle chain saw, and the like. It can also be used for power tools such as drill, cutting saw, electric circular saw, and the like. The motor provides power to drive the external device to rotate. The outer rotor motor includes an outer rotor and a stator assembly. The outer rotor is coupled with the stator assembly to rotate in an energized state, as shown in FIG.1 and FIG.2. The outer rotor 100 includes a housing 10, a rotating shaft 20, a fan 30, and a magnetic tile assembly 40.

As shown in FIG. 1 to FIG.3, the housing 10 includes a side wall 11 and an end wall 12. The side wall 11 and the end wall 12 are of an integrated structure, and a shaft hole 13 is formed in the center of the end wall 12. A plurality of heat dissipation holes 14 are further formed in the end wall 12. And the plurality of heat dissipation holes 14 surround the shaft hole 13 and are uniformly arranged in the end wall 12 in the circumferential direction. One end of the rotating shaft 20 extends into the housing 10 and penetrates out of the shaft hole 13, and the rotating shaft 20 is fixedly connected with the housing 10 at the shaft hole 13. Namely, by arranging the housing 10 as an integrated structure, the overall concentricity of the assembly body may be greatly improved, positive effects of the dynamic balance of the rotor assembly may occur, and the production process may also be simplified. In the embodiment, the rotating shaft 20 is in interference fit with the shaft hole 13 to be fixedly connected. And the connecting position of the rotating shaft 20 and the shaft hole 13, namely the circumferential direction of the welding position 201, is welded and fixed to prevent relative rotation between the rotating shaft 20 and the integrated housing 10 in an emergency stop.

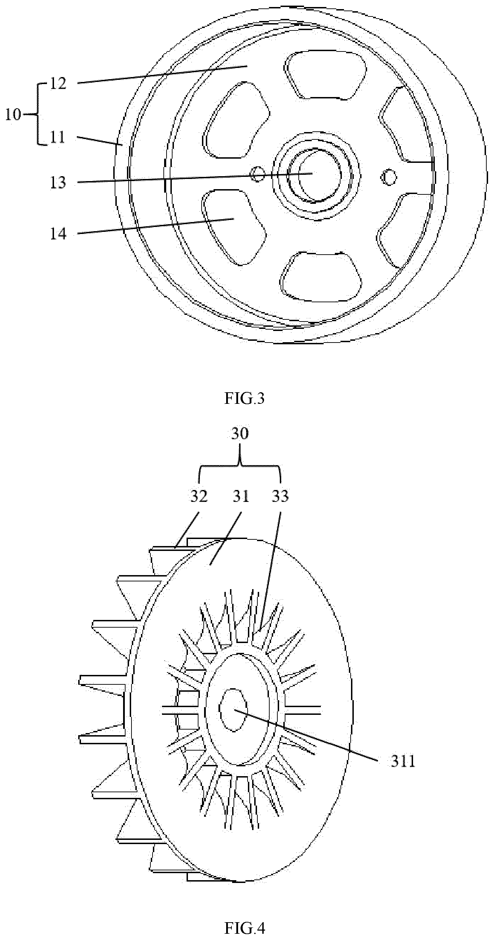

As shown in FIG. 2 and FIG.4, in this embodiment, the fan 30 is fixedly connected with one end of the rotating shaft 20 penetrating out of the shaft hole 13. The fan 30 includes a bottom plate 31, blades 32 and balancing grooves 33. A connecting hole 311 is formed in the center of the bottom plate 31. The rotating shaft 20 is in interference fit with the connecting hole 311 to be fixedly connected. The blades 32 are arranged on one side, close to the end wall 12, of the bottom plate 31 and are uniformly arranged in the circumferential direction. The balancing grooves 33 are arranged on the other side of the bottom plate 31 and are uniformly arranged around the connecting holes 311. And a plurality of balance grooves 33 are uniformly distributed on the tail end of the fan 30 to facilitate the rotor assembly to perform weight gain dynamic balance to ensure the stability of the motor in a high-speed operation. After imbalance is tested, the balance mud can be disposed in the corresponding balancing groove 33, the dynamic balance performance of the rotor can be improved thereby. In the embodiment, the fan 30 may adopt a lightweight material, such as a plastic fan, preferably a high-strength nylon material fan. By using the light fan structure, on the premise of meeting the heat dissipation of the motor, the rotational inertia in a high-speed operation and the weight of the rotor assembly of the rotor can be fully reduced to enable the motor to complete mechanical braking better at high speed, and without relative rotation between the fan and the rotating shaft. In one embodiment of the disclosure, the fan 30 is a centrifugal fan, and in other embodiments of the disclosure, the fan 30 may also be an axial flow fan or a hybrid fan.

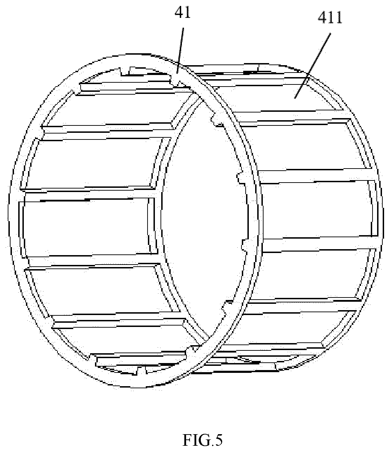

As shown in FIG. 2 and FIG. 5, in the embodiment, the outer rotor 100 further includes a magnetic tile assembly 40. The magnetic tile assembly 40 is disposed inside the housing 10 and fixedly connected to the inner wall of the side wall 11. In the embodiment, the magnetic tile assembly 40 includes a magnetic tile clamp 41, N-pole magnetic tiles 42, and S pole magnetic tiles 43. The magnetic tile clamp 41 is arranged inside the housing 10 and fixedly connected with the inner wall of the side wall 11. A plurality of magnetic tile clamping holes 411 are formed in the magnetic tile clamp 41 at intervals, and the magnetic tile clamping holes 411 are distributed in the circumferential direction. The N-pole magnetic tiles 42 and the S-pole magnetic tiles 43 are arranged in the magnetic tile clamping holes 411 at intervals and are fixedly connected. In the embodiment, the quantity of the magnetic tile clamping holes 411 is an even number, and the N-pole magnetic tiles 42 and the S-pole magnetic tiles 43 are arranged in the magnetic tile clamping holes 411 at intervals. In particular, the outer rotor uses the magnetic tile clamp 41 to uniformly distribute the magnetic tiles on the inner wall of the housing 10 of the outer rotor. And the magnetic tile clamp 41 is in full contact with axial planes of the magnetic tiles. When installing, firstly mount the magnetic tile to the inner wall of the housing 10, then adhere the magnetic tiles to the magnetic tile clamping holes 411 in the magnetic tile clamp 41. The magnetic tile clamp 41 is embedded into the integrated housing by glue. The N-pole magnetic tiles 42 and the S pole magnetic tiles 43 of opposite polarity are embedded in the magnetic tile clamping holes 411 of the magnetic tile clamp 41 at intervals, and are bonded to the integrated housing by glue. Such that the uneven circumference distribution caused by the suction force among the magnetic tiles can be solved well to ensure the uniformity of the magnetic field. And the shifting of the magnetic tiles caused by emergency braking under high-speed operation can be solved. In the meanwhile, the gaps between the magnetic tiles can be completely filled by the plastic magnetic tile clamp to enable the magnetic tiles and the magnetic tile clamp to form a whole on the inner wall of the housing to avoid the magnetic tiles falling off in a sudden stop. In the embodiment, the magnetic tile clamp may preferably be a squirrel-cage plastic magnetic tile clamp. And the rotating axes of the housing 10, the rotating shaft 20, the fan 30 and the magnetic tile assembly 40 are in a same straight line.

In addition, the stator assembly is disposed inside the housing, and is sleeved on the rotating shaft. And the stator assembly includes a stator core and a plurality of tooth parts. The stator core is disposed in the housing, and the rotating shaft penetrates out from the stator core. The plurality of tooth parts are disposed at intervals on the outer edge of the stator core along the circumferential direction. And the plurality of tooth parts correspond to the N-pole magnetic tiles and the S-pole magnetic tiles. The outer wall surface of the tooth part is an arc surface. The stator assembly further includes an armature winding. And the armature winding can be wound on the stator core. Specifically, the stator assembly further includes the armature winding and stator core may be disposed in the housing. The armature winding can be wound on the stator core, and may generate an electromagnetic field in the energized state. In some embodiments, the stator core may include a plurality of tooth parts which are disposed at intervals on the external side of the stator core along the circumferential direction. The stator core may further include a central through hole to facilitate installation with the outer rotor. The plurality of tooth parts correspond to the N-pole magnetic tiles and the S-pole magnetic tiles, and an outer wall surface of the tooth part is an arc surface to form an air gap to the outer rotor.

In the disclosure, the outer rotor assembly uses a squirrel-cage plastic magnetic tile clamp to uniformly distribute the magnetic tiles on the inner wall of the housing of the outer rotor to fully contact with the axial planes of the magnetic tiles. When installing, firstly mount the plastic magnetic tile on the inner wall of the housing, and embed the magnetic tile clamp into the integrated housing by glue. Then the N-pole magnetic tiles and the S-pole magnetic tiles are embedded into the plastic magnetic tile clamp at intervals and bonded to the integrated housing by glue. Such that the uneven circumference distribution caused by the suction force between the magnetic tiles can be solved well to ensure the uniformity of the magnetic field. And the shifting of the magnetic tiles caused by emergency braking under high-speed operation can be solved. In the meanwhile, the gaps between the magnetic tiles can be completely filled by the plastic magnetic tile clamp to enable the magnetic tiles and the magnetic tile clamp to form a whole on the inner wall of the housing to avoid the magnetic tiles falling off in a sudden stop.

In the disclosure, the rotating shaft is mounted on the integrated housing, and is arranged in an interference fit manner to enable the rotating shaft and the integrated housing to rotate synchronously. After the rotating shaft is pressed into the integrated housing, at the joint of the outer side of the integrated housing and the rotating shaft, laser welding is used to evenly weld one circle along the circumferential direction to prevent relative rotation between the rotating shaft and the integrated housing under a sudden stop. In other embodiments, other welding methods may be used.

In the disclosure, on the premise of meeting the heat dissipation of the motor, the lightweight fan structure is adopted to reduce the weight of the rotor assembly and the rotational inertia of the rotor assembly under high-speed operation to complete the mechanical brake at high speed better. And the relative rotation between the housing and the rotating shaft cannot occur. At the same time, a plurality of grooves are uniformly distributed on the tail end of the plastic fan to facilitate the rotor assembly to perform weight gain balance to ensure the stability of the motor in a high-speed state. After the imbalance is tested, the balance mud can be disposed in the corresponding groove to improve the dynamic balance performance of the rotor.

In the embodiment, the integrated housing is fixed with the rotating shaft, meanwhile, the light fan is arranged on the rotating shaft. The plastic fan is too light to have little effect on the unbalance of the rotor assembly. And the integrated housing and the rotating shaft are welded after installation. Such that the damage of the motor cause by the relative displacement of the housing and the rotating shaft in use can be avoided.

The above description is merely preferred embodiments and description of the principles of the disclosure. For those skilled in the art, the scope of the disclosure is not limited to the particular combination of the above-described technical features, but also to other technical solutions formed by any combination of the above-described technical features or the equivalent features thereof without departing from the inventive concept, such as, technical solutions that formed by using the above-described features and technical features of similar function to replace with each other, but not limited herein.

In addition to the technical features described in the specification, the remaining technical features are prior art for the skilled in the field. To highlight the creative characteristics of the disclosure, the remaining technical features will not be described in detail herein.

## Claims

1. An outer rotor assembly, comprising:
a housing, including a side wall and an end wall, wherein
the side wall and the end wall are of an integrated structure, and a shaft hole is formed in a center of the end wall;
a rotating shaft, wherein one end of the rotating shaft extends into the housing and penetrates out of the shaft hole, and the rotating shaft is fixedly connected with the shaft hole;
a fan, fixedly connected with one end of the rotating shaft penetrating out of the shaft hole; and
a magnetic tile assembly, disposed within the housing and fixedly connected to the side wall.

2. The outer rotor assembly of claim 1, wherein the magnetic tile assembly comprises a magnetic tile clamp, a plurality of S-pole magnetic tiles, and a plurality of N-pole magnetic tiles,
wherein the magnetic tile clamp is disposed within the housing and fixedly connected with an inner wall of the side wall, the plurality of the N-pole magnetic tiles and the plurality of the S-pole magnetic tiles are arranged at intervals along a circumferential direction of the magnetic tile clamp, and are fixedly connected with the magnetic tile clamp.

3. The outer rotor assembly of claim 2, wherein the magnetic tile clamp is a squirrel-cage magnetic tile clamp.

4. The outer rotor assembly of any one of the preceding claims, wherein the end wall is further provided with a plurality of heat dissipation holes, and the plurality of heat dissipation holes surround the shaft hole and are uniformly arranged on the end wall in a circumferential direction.

5. The outer rotor assembly of any one of the preceding claims, wherein the rotating shaft is in interference fit with the shaft hole, and a circumferential direction of a connecting position of the rotating shaft and the shaft hole is fixed in a welding manner.

6. The outer rotor assembly of any one of the preceding claims, wherein the fan comprises a bottom plate and blades,
wherein a connecting hole is formed in a center of the bottom plate, the rotating shaft is in interference fit with the connecting hole to be fixedly connected, and the blades are arranged on one side, close to the end wall, of the bottom plate and are uniformly arranged in a circumferential direction.

7. The outer rotor assembly of claim 6, wherein the bottom plate is further provided with balancing grooves,
wherein the balancing grooves are disposed on one side of the bottom plate away from the blades and are uniformly arranged around the connecting hole.

8. The outer rotor assembly of any one of the preceding claims, wherein rotating axes of the housing, the rotating shaft, the fan, and the magnetic tile assembly are located on a same straight line.

9. The outer rotor assembly of any one of the preceding claims, wherein the fan is a centrifugal fan, an axial-flow fan, or a hybrid fan.

10. A brushless motor of an outer rotor, comprising:
the outer rotor assembly of any one of the preceding claims, and
a stator assembly, disposed within the housing, sleeved on the rotating shaft, and
the stator assembly comprising a stator core, a plurality of tooth parts, and an armature winding,
wherein the stator core is arranged in the housing; the rotating shaft penetrates out of the stator core; the plurality of tooth parts are arranged at intervals on an outer edge of the stator core in a circumferential direction; the armature winding is wound on the stator core.
